# EUROPÄISCHE PATENTSCHRIFT

(11) **EP 3 818 448 B1**
(45) Veröffentlichungstag und Bekanntmachung des Hinweises auf die Patenterteilung: **04.03.2026**
(21) Anmeldenummer: 19732252.2
(22) Anmeldetag: 29.05.2019
(51) Int. Cl.: G06F 13/362, G06F 13/42

(54) **BÜNDELUNG VON KAMERA- UND RADAR-ROHDATENKANÄLEN**
BUNDLING OF CAMERA AND RADAR RAW DATA CHANNELS
GROUPAGE DE CANAUX DE DONNÉES BRUTES DE CAMÉRA ET DE RADAR

(30) Priorität: 04.07.2018 DE 102018211036
(43) Veröffentlichungstag der Anmeldung: 12.05.2021
(73) Patentinhaber: AUMOVIO Autonomous Mobility Germany GmbH, 85057 Ingolstadt (DE)
(72) Erfinder: BRANDHUBER, Alexander, 90411 Nürnberg (DE); BREUER, Karsten, 90411 Nürnberg (DE); WICHMANN, Thomas, 90411 Nürnberg (DE); GANTNER, Manfred, 90411 Nürnberg (DE); WALTER, Manuel, 90411 Nürnberg (DE)
(74) Vertreter: Aumovio Corporation
(86) Internationale Anmeldenummer: PCT/DE2019/200052
(87) Internationale Veröffentlichungsnummer: WO 2020/007423

(56) Entgegenhaltungen:
- EP-A1- 3 324 548
- DE-A1- 102015 211 107
- DE-A1- 102015 224 782
- US-A1- 2016 212 456

## Beschreibung

Die Erfindung betrifft eine Vorrichtung und ein Verfahren zur Bündelung von zwei Datenkanälen über eine Punkt-zu-Punkt-Verbindung, beispielsweise auf der Basis eines CSI-2 Protokolls, insbesondere zur Bündelung von Kamera- und Radar-Rohdatenkanälen. Weiterhin betrifft die Erfindung eine Verwendung, ein Programmelement und ein computerlesbares Medium.

Punkt-zu-Punkt-Verbindungen, insbesondere Kommunikationsverbindungen, werden verwendet, um Daten über eine Leitung zu übertragen.

Ein Anwendungsfall kann sein, Rohdaten von Bildsensoren und von Radarsensoren über derartige Leitungen zu übertragen. Ein Anwendungsfall kann sein, dass diese Daten in einem Fahrzeug erfasst werden und z.B. für Assistenzsysteme verwendet werden. Eine Gruppe dieser Anwendungen können sog. ADAS-Anwendungen ("Advanced Driver Assistance Systems") sein. Bei diesen werden aus unterschiedlichen Sensoren - z.B. Radar, Lidar, Ultraschall, Laser, videobasierte Systeme wie Kameras, etc. - große Datenmengen zusammengeführt, visualisiert und/oder validiert. Die verschiedenen Sensortypen weisen in vielen Fällen Unterschiede auf, beispielsweise hinsichtlich ihrer Datenrate und/oder der Anzahl der verwendeten Leitungspaare. In einer Anwendung, die beide Sensortypen beinhaltet, muss für eine gemeinsame Verarbeitungseinheit daher für jeden Sensortyp ein dedizierter Empfänger zur Verfügung stehen, oder es muss pro Sensor eine eigene Verarbeitungseinheit implementiert werden. Diese führt zu einem hohen Aufwand, sowohl bezüglich der Verarbeitungseinheiten als auch bezüglich der Leitungen und der Stecker.

DE 102015224782 A1 zeigt ein Verfahren zum Betreiben einer Radarvorrichtung für ein Kraftfahrzeug, bei dem Betriebsdaten einer HF-Einrichtung an eine Mikrorechnereinrichtung übertragen und von dieser ausgewertet werden. Die HF-Einrichtung kann über eine Schnittstelle in Form eines Datenbusses zur Übermittlung von Basisbanddaten aus einer Umfelderfassung verfügen. Die benötigten Betriebsdaten können über den digital ausgebildeten Datenbus, der herkömmlich ausschließlich für die Übertragung der Basisbanddaten ausgelegt ist, übertragen werden. Dazu kann die Schnittstelle z.B. gemäß der LVDS oder der MIPI-CSI2 Spezifikation ausgelegt werden.

EP 3324548 A1 zeigt ein Bussystem für Fahrzeugsysteme, über das eine Vielzahl von Steuergeräten (Processing units) Daten untereinander übertragen können. Ein Kamera- und ein Radarsteuergerät können ihre Daten an eine Konvertierungseinheit übermitteln, wo die Daten kombiniert und für die Übertragung moduliert werden können. Die Übertragung an ein ADAS Steuergerät kann über einen gemeinsamen schnellen seriellen Bus erfolgen.

Es ist Aufgabe der vorliegenden Erfindung, eine verbesserte Übertragungslösung anzugeben. Die Aufgabe wird gelöst durch die Gegenstände der unabhängigen Patentansprüche. Vorteilhafte Ausführungsformen sind Gegenstand der abhängigen Ansprüche, der folgenden Beschreibung sowie der Figuren.

Eine Vorrichtung zur Bündelung von zwei Datenkanälen über eine Punkt-zu-Punkt-Verbindung weist dabei einen ersten Datenkanal auf, der eine Vielzahl von Sequenzen von ersten Daten über eine erste Leitung überträgt, wobei zwischen jeweils zwei Sequenzen von ersten Daten eine Datenlücke mit einer ersten vordefinierten Größe angeordnet ist.

Bei vielen Punkt-zu-Punkt-Verbindungen, insbesondere bei seriellen Verbindungen, werden Daten blockweise übertragen, d.h. es wird eine Sequenz von mehreren Daten übertragen, dann eine Pause oder "blanking phase", in der keine Daten übertragen werden, und anschließend eine weitere Sequenz von mehreren Daten. Es gibt also eine Datenlücke zwischen jeweils zwei Sequenzen von Daten. Diese Datenlücke kann, je nach Busprotokoll, eine unterschiedliche Länge oder auch immer die gleiche Länge aufweisen. Bei einigen Busprotokollen kann eine vordefinierte Größe dieser Datenlücke angegeben werden. Diese vordefinierte Größe kann immer gleich groß sein; es kann, je nach Busprotokoll, auch eine Mindestgröße definiert sein. Im Folgenden wird unter der ersten vordefinierten Größe der Datenlücke eine Anzahl von Daten verstanden, die "netto" - d.h. nach Abzug eines physikalischen und logischen Protokoll-Overheads - zu Verfügung steht, z.B. für ein potentielles Einfügen von weiteren Daten.

Die Vorrichtung weist weiterhin einen zweiten Datenkanal auf, der eine Vielzahl von Sequenzen von zweiten Daten über eine zweite Leitung überträgt. Der zweite Datenkanal weist dabei eine andere Datenrate auf. Der zweite Datenkanal kann eine andere Anzahl von Leitungen oder in einer Ausführungsform auch ein anderes Busprotokoll aufweisen.

Der erste Datenkanal ist ausgebildet zur Übertragung von Kamera-Rohdaten und der zweite Datenkanal zur Übertragung von Rohdaten eines Radar-, Lidar-, Ultraschall- und/oder LaserSystems. Insbesondere Radarsysteme weisen in vielen ADAS-Anwendungen eine deutlich geringere Datenrate auf als Kamerasysteme.

Die Vorrichtung weist weiterhin einen dritten Datenkanal auf, der eine Sequenz von dritten Daten über eine dritte Leitung überträgt. Der dritte Datenkanal weist dabei in einer Ausführungsform dasselbe Busprotokoll auf wie der erste Datenkanal.

Außerdem weist die Vorrichtung eine Multiplexvorrichtung mit einem Multiplexer und einem Pufferspeicher auf. Dabei ist ein erster Eingang der Multiplexvorrichtung mit der ersten Leitung verbunden und der erste Eingang der Multiplexvorrichtung mit dem Multiplexer verbunden. Zwischen dem ersten Eingang der Multiplexvorrichtung und dem Multiplexer können beispielsweise Treiber angeordnet sein; der erste Eingang der Multiplexvorrichtung kann aber auch direkt mit dem Multiplexer verbunden sein. Die Multiplexvorrichtung weist einen zweiten Eingang auf, der mit der zweiten Leitung verbunden ist. Der zweite Eingang der Multiplexvorrichtung ist mit dem Multiplexer über den Pufferspeicher verbunden. Der Pufferspeicher ist eingerichtet, die zweiten Daten von der zweiten Leitung zwischenzuspeichern. Die Multiplexvorrichtung weist einen Ausgang auf, der mit der dritten Leitung und mit einem Ausgang des Multiplexers verbunden ist. Zwischen dem Ausgang des Multiplexers und der Multiplexvorrichtung können beispielsweise Treiber angeordnet sein; der Ausgang des Multiplexers kann aber auch direkt mit der Multiplexvorrichtung verbunden sein.

Der Multiplexer überträgt die Sequenz von ersten Daten, von dem ersten Eingang der Multiplexvorrichtung, an den Ausgang der Multiplexvorrichtung. Dies geschieht im Wesentlichen ohne Verzögerung, d.h. die ersten Daten werden im Wesentlichen direkt an den Ausgang der Multiplexvorrichtung geleitet, insbesondere ohne dass speichernde Elemente in diesem Pfad angeordnet sind.

Der Multiplexer überträgt die Sequenz von zweiten Daten von dem zweiten Eingang an den Ausgang, wenn an dem ersten Eingang die Datenlücke beginnt und wenn der Pufferspeicher mit zweiten Daten mit einer zweiten vordefinierten Größe gefüllt ist, wobei die zweite vordefinierte Größe kleiner oder gleich der ersten vordefinierten Größe ist. Die vordefinierte Größe der Datenlücke ist bekannt. Diese Größe kann beispielsweise durch die Definition des Busprotokolls vorgegeben sein, durch Einstellungen bei der Initialisierung des Busses, oder auch durch eine Bestimmung vor jeder Datenlücke. Wenn der Pufferspeicher mit zweiten Daten gefüllt ist, und zwar mindestens im Umfang der zweiten vordefinierten Größe, dann wird die Datenlücke mit diesen Daten gefüllt. Der Multiplexer ist also erfindungsgemäß dazu eingerichtet, logische Entscheidungen zu treffen, ob und wann zweite Daten in die Datenlücke der ersten Daten eingefügt werden. Dadurch weisen die Sequenzen von dritten Daten, am Ausgang der Multiplexvorrichtung, eine Bündelung von Sequenzen von ersten Daten und von Sequenzen von zweiten Daten auf. In einer Ausführungsform kann der Pufferspeicher nach einer vordefinierten Anzahl von Datenlücken mit Dummy-Daten gefüllt werden, so dass auch Sensoren mit einer geringen Datenrate ihre Daten innerhalb einer vordefinierten Zeit an den Ausgang der Multiplexvorrichtung übertragen. In einer Ausführungsform können auch mehrere zweite Eingänge mit entsprechenden Pufferspeichern vorgesehen sein, um eine Vielzahl von Sensordaten, beispielsweise von verschiedenen Sensortypen, zu erfassen. Die Gesamtheit der Daten von den zweiten Datenkanälen darf dabei im Mittel nicht die Gesamtheit der Datenlücken des ersten Datenkanals überschreiten.

Die beschriebene Vorrichtung nutzt also den dritten Datenkanal mit einer höheren Auslastung als den ersten Datenkanal. Weiterhin spart die Vorrichtung Leitungen und Stecker, Treiberbausteine und/oder Serializer oder ähnliche Elemente ein, im Vergleich zu einem System, welches den ersten und den dritten Datenkanal über jeweils getrennte Leitungen überträgt. Vorteilhafterweise geschieht dies ohne nennenswerte Verzögerung der Daten auf dem ersten Datenkanal, da auf diesem Pfad keine speichernden Elemente angeordnet sind und die Daten des ersten Datenkanals gewissermaßen mit höherer Priorität übertragen werden. Ein weiterer Vorteil der Vorrichtung besteht darin, dass - wegen der höheren Integration und der reduzierten Anzahl der Leitungen - eine weitere Miniaturisierung der Systeme vorgenommen werden kann. Dies führt insbesondere zu einer Reduzierung der Leistungsaufnahme und zu einer Verbesserung des thermischen Verhaltens des Gesamtsystems.

In einer Ausführungsform der Vorrichtung funktioniert die Punkt-zu-Punkt-Verbindung auf der Basis eines CSI-2 Protokolls.

CSI-2 ist ein Protokoll, das von der Mobile Industry Processor Interface (MIPI) Alliance standardisiert wurde. "CSI" steht dabei für "Camera Serial Interface".

In einer Ausführungsform weisen der erste Datenkanal und der zweite Datenkanal unterschiedliche CSI-Kanalnummern auf. Bei dem CSI-2 Protokoll ist es, als Option, vorgesehen, Datenpaketen eine virtuelle Kanalnummer zuzuordnen. In einer Ausführungsform kann, im sogenannten Packet-Header der CSI-2, für Videodaten der Kanal 0 und für Radardaten der Kanal 1 bestimmt werden. Dadurch ist es möglich, im Zentralsteuergerät Radar- und Videodaten zu unterscheiden und entsprechend zu trennen und dabei diese Daten über eine gemeinsame physikalische Schnittstelle, nämlich den dritten Datenkanal, zu senden. In einer Ausführungsform wird der dritte Datenkanal, d.h. beispielsweise die Verbindungen von Sensoren oder Sensorclustern zum zentralen Steuergerät, über eine einzelne LVDS-Koaxialleitung realisiert.

Gemäß einer Ausführungsform ist die Länge eines Pakets von zweiten Daten in einem Header-Element des Pakets der zweiten Daten vermerkt, so dass der Multiplexer anhand der Länge entscheiden kann, ob und welche Dimensionierung oder Partitionierung der zweiten Daten im Pufferspeicher vorgenommen wird, oder ob der Pufferspeicher sofort geleert werden kann, d.h. die im Pufferspeicher enthaltenen Daten vom Multiplexer in die Datenlücke der ersten Daten eingefügt werden.

Weitere Ausführungsvarianten sind:
- vorbekannte Datenpaket-Längen
- oder eine spezielle Markierung am Anfang eines jeden betreffenden Datenblockes, der die Unterscheidung unabhängig von der Länge erlaubt (sehr ähnlich dem geschilderten Kanalprinzip, d.h. der Zuordnung von Datenpakten zu virtuellen Kanalnummern).

In einer Ausführungsform ist der Pufferspeicher als FIFO gestaltet. Dies ermöglicht eine einfache und schnelle Zuordnung zu den Sendezeitpunkten der Daten auf dem zweiten Datenkanal.

In einer Ausführungsform ist die Datenrate des ersten Datenkanals mehr als zweimal so hoch, insbesondere mehr als viermal so hoch, als die Datenrate des zweiten Datenkanals. Durch diese Dimensionierung wird ein Überlaufen des Pufferspeichers verhindert.

In einer Ausführungsform sind die Multiplexvorrichtung und der Pufferspeicher als FPGA, als CPLD (Complex Programmable Logic Device) oder als ein ASIC, insbesondere als ein einziges FPGA, ein einziges CPLD oder als ein einziges ASIC, realisiert. Auch sonstige programmierbare logische Schaltungen sind hierfür vorstellbar. Dies ermöglicht eine sowohl kompakte als auch preisgünstige Realisierung der Vorrichtung, auch für kleinere bzw. mittelgroße Serien.

In einem FPGA, CPLD oder ASIC kann die Logik der Vorrichtung gemäß einer Ausführungsform als endlicher Zustandsautomat (Finite State Machine) realisiert sein. Dies ermöglicht ein besonders klares Design und eine relativ einfache Verifizierung der Funktionalität.

Mit anderen Worten ist das FPGA, das CPLD oder das ASIC derart konfigurierbar (programmierbar bzw. generierbar), dass die Entscheidung, ob und wann die Sequenz von zweiten Daten von dem zweiten Eingang an den Ausgang der Multiplexvorrichtung übertragen wird, durch einen auf dem FPGA, CPLD oder ASIC implementierten endlichen Zustandsautomaten getroffen wird.

Die Erfindung betrifft weiterhin ein Verfahren zur Bündelung von zwei Datenkanälen auf der Basis eines CSI-2 Protokolls, mittels der oben erläuterten Vorrichtung. Das Verfahren weist folgende Schritte auf:
- Übertragen einer Vielzahl von Sequenzen von ersten Daten über eine erste Leitung an einen ersten Eingang einer Multiplexvorrichtung, wobei der erste Eingang mit einem Multiplexer verbunden ist, und wobei zwischen jeweils zwei Sequenzen von ersten Daten eine Datenlücke mit einer vordefinierten Größe angeordnet ist.
- Übertragen einer Vielzahl von Sequenzen von zweiten Daten über eine zweite Leitung an einen zweiten Eingang der Multiplexvorrichtung, wobei der zweite Eingang mit dem Multiplexer über den Pufferspeicher, welcher die zweiten Daten von der zweiten Leitung zwischenspeichert, verbunden ist.
- Wenn der Pufferspeicher zu Beginn der Datenlücke mit zweiten Daten mit der vordefinierten Größe gefüllt ist, Einfügen der Sequenz von zweiten Daten in die Datenlücke.
- Übertragen einer Vielzahl von Sequenzen von dritten Daten, welche eine Bündelung von Sequenzen von ersten Daten und von Sequenzen von zweiten Daten aufweisen.

Die genannte Vorrichtung wird insbesondere zur Bündelung von Kamera- und Radar-Rohdatenkanälen verwendet.

Die Erfindung betrifft weiterhin ein Programmelement, welches, wenn damit ein FPGA oder ein CPLD programmiert oder ein ASIC generiert wird, das FPGA, das CPLD oder das ASIC anweist, das geschilderte Verfahren durchzuführen.

Die Erfindung betrifft weiterhin ein computerlesbares Medium, auf dem das genannte Programmelement gespeichert ist.

Zur weiteren Verdeutlichung wird die Erfindung anhand von in den Figuren abgebildeten Ausführungsformen beschrieben. Diese Ausführungsformen sind nur als Beispiel, nicht aber als Einschränkung zu verstehen.

Dabei zeigen:
**Fig. 1****:** die schematische Darstellung einer Vorrichtung zur Übertragung von Kamera- und Radar-Rohdaten gemäß dem Stand der Technik;
**Fig. 2****:** die schematische Darstellung einer Ausführungsform einer Vorrichtung zur Bündelung und Übertragung von Kamera- und Radar-Rohdaten gemäß der Erfindung;
**Fig. 3****:** die schematische Darstellung einer Ausführungsform zur Einfügung von Radar-Rohdaten in einen Datenstrom mit Kamera- Rohdaten;
**Fig. 4****:** eine Übersicht über ein Verfahren zur Bündelung von zwei Datenkanälen über eine Punkt-zu-Punkt-Verbindung.

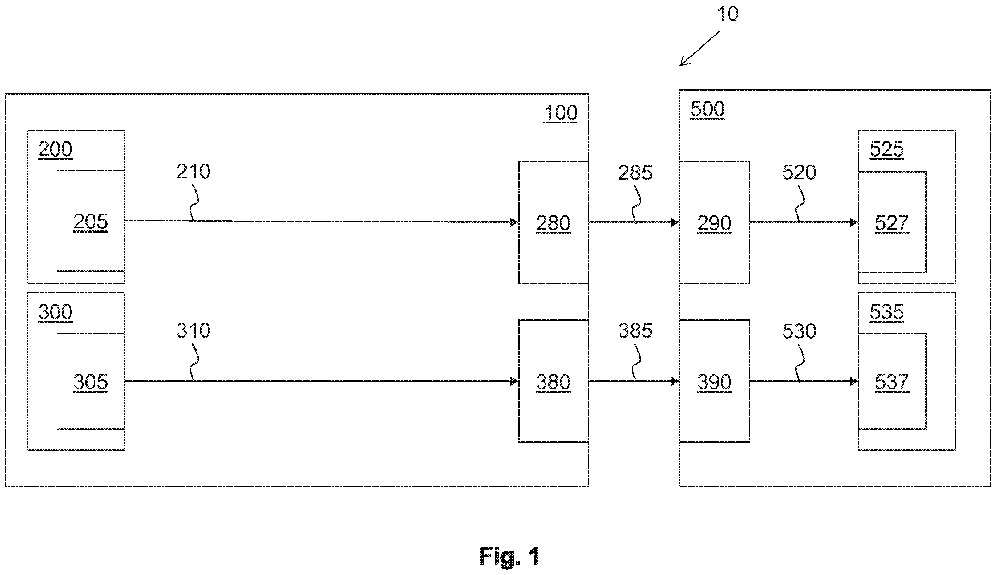

**Fig. 1** zeigt eine Vorrichtung 10 zur Übertragung von Kamera- und Radar-Rohdaten gemäß dem Stand der Technik. Die Vorrichtung 10 weist eine Sensorvorrichtung 100 mit zwei Datenquellen für Sensordaten auf: einen Radar-Transceiver 200 und einen Bildsensor 300. Die Transmitter 205 und 305 senden die Radar-Rohdaten über die Datenleitung 210 und die Kamera-Rohdaten über die Datenleitung 310. Die Sensorvorrichtung 100 weist für jeden Datenkanal eine Sendevorrichtung zur Hochgeschwindigkeits-Datenüber- tragung 280 und 380 auf. Diese Sendevorrichtungen können z.B. als LVDS-Serializer (LVDS: Low Voltage Differential Signaling) realisiert sein. Die Daten werden über die beiden Leitungen 285 und 385 übertragen und von einer Steuergerätevorrichtung 500 empfangen und verarbeitet. Die Steuergerätevorrichtung 500 weist dabei für jeden Datenkanal eine Empfangsvorrichtung 290 und 390 auf. Diese Empfangsvorrichtungen können z.B. als LVDS-DeSerializer realisiert sein. Die Empfangsvorrichtungen 290 und 390 senden die Daten dann weiter zu einem Steuergerät 525, mit einem Receiver-Baustein 527, für die Verarbeitung der Radar-Rohdaten und zu einem Steuergerät 535, mit einem Receiver-Baustein 537, für die Verarbeitung der Kamera-Rohdaten.

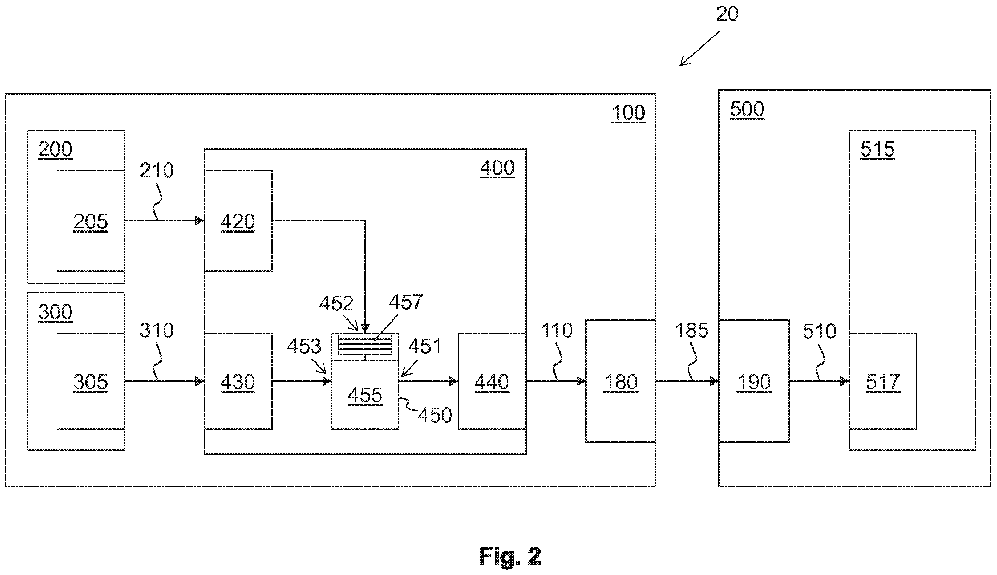

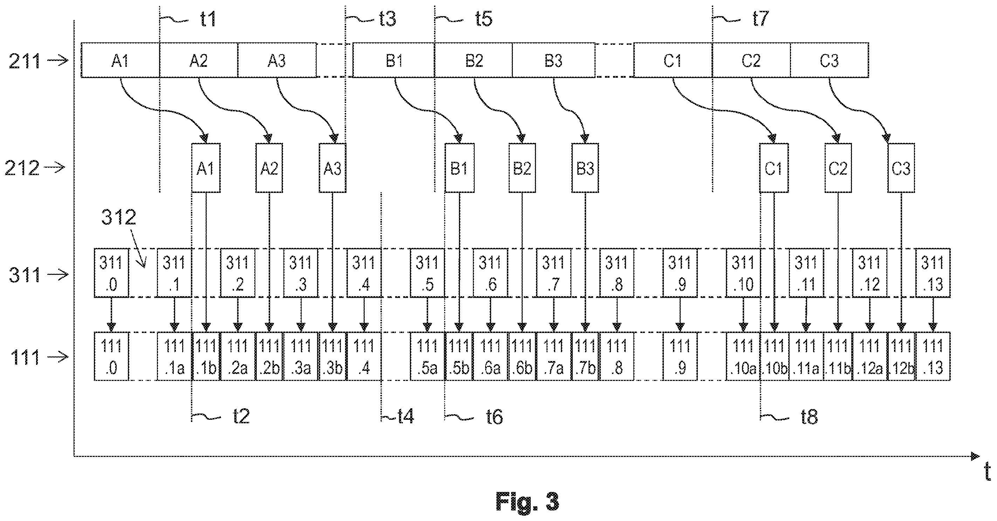

**Fig. 2** zeigt die schematische Darstellung einer Ausführungsform einer Vorrichtung 20 zur Bündelung und Übertragung von Kamera- und Radar-Rohdaten gemäß der Erfindung. Die Datenquellen 200 und 300 für Sensordaten sind im Wesentlichen dieselben wie bei **Fig. 1****.** Die Datenquellen werden über die Leitungen 210 und 310 zu den Treibern (Receiver-Bausteinen) 420 und 430 übertragen. Das Steuergerät 400 fasst die Kamera- und Radar-Rohdaten zu einer gemeinsamen Leitung 110 zusammen. Dazu werden die Kamera-Rohdaten über den Receiver-Baustein 430 an den ersten Eingang 453 der Multiplexvorrichtung 450 übertragen. Die Kamera-Rohdaten weisen dabei eine Vielzahl von Sequenzen von ersten Daten 311 auf, welche über die erste Leitung 310 und den Receiver-Baustein 430 übertragen werden. Zwischen jeweils zwei Sequenzen von ersten Daten 311 ist eine Datenlücke 312 mit einer vordefinierten Größe angeordnet. Für eine Darstellung der Datensequenzen siehe **Fig. 3****.** Die ersten Daten 311 werden an den Multiplexer 455, der Teil der Multiplexvorrichtung 450 ist, übertragen und an den Ausgang 451 weitergeleitet. Auf dem Pfad vom ersten Eingang 453 zu dem Ausgang 451 sind keine speichernden Elemente angeordnet.

Die Multiplexvorrichtung 450 weist weiterhin einen zweiten Eingang 452 auf. Von dort werden die Radar-Rohdaten an einen Pufferspeicher 457 übertragen. Der Pufferspeicher 457 kann als FIFO (First In First Out) implementiert sein. In einer Ausführungsform ist die Größe der Pufferspeichers 457 größer als die Datenlücke 312 gewählt. Vor dem Beginn jeder Datenlücke 312 überprüft die Multiplexvorrichtung 450 den Füllstand des Pufferspeichers 457. Wenn der Pufferspeicher 457 einen Füllstand, welcher der Größe der Datenlücke 312 entspricht, erreicht oder überschritten hat, dann fügt die Multiplexvorrichtung 450, mittels des Multiplexers 455, Radar-Rohdaten aus dem Pufferspeicher 457 in die Datenlücke 312 ein. In einer Ausführungsform kann die Datenlücke 312 nicht vollständig genutzt werden, d.h. es werden bei einem Füllstand des Pufferspeichers 457, welcher geringer ist als die Datenlücke 312, Daten eingefügt. In einer Ausführungsform kann der Pufferspeicher nach einer vordefinierten Anzahl von Datenlücken mit Dummy-Daten gefüllt werden, so dass auch Radar-Sensoren mit einer geringen Datenrate ihre Daten innerhalb einer vordefinierten Zeit an den Ausgang der Multiplexvorrichtung übertragen. Dabei kann der Beginn der Dummy-Daten durch eine Escape-Sequenz gekennzeichnet werden.

In einer Ausführungsform kann die Länge der Radar-Rohdaten in einem Header-Element der Radar-Rohdaten vermerkt sein, so dass die Logik des Steuergeräts 400 entscheiden kann, ob und welche Dimensionierung oder Partitionierung vorgenommen wird, oder ob der Puffer sofort geleert werden kann.

Die gemeinsamen Daten werden dann von dem Ausgang 451 über die gemeinsame Leitung 110 zu der gemeinsamen Sendevorrichtung 180 übertragen. Die Sensorvorrichtung 100 überträgt die gemeinsamen Daten über eine einzige Leitung 185 zur Steuergerätevorrichtung 500. Die Empfangsvorrichtung 190 der gemeinsamen Daten kann dann die Datenkanäle wieder aufteilen (nicht gezeigt). In der gezeigten Ausführungsform leitet die Empfangsvorrichtung 190 die gemeinsamen Daten weiter zu einem Steuergerät 515, mit einem Receiver-Baustein 517, das die gemeinsamen Daten verarbeitet.

In einer Ausführungsform sind die Sensorvorrichtung 100 und die Steuergerätevorrichtung 500 auf derselben Baugruppe realisiert. In diesem Fall können die Verbindungskabel 185 und die Schnittstellentreiber 180 und 190 entfallen, und der Transmitter 440 und der Receiver-Baustein 517 können direkt miteinander kommunizieren.

**Fig. 3** zeigt die schematische Darstellung einer Ausführungsform zur Einfügung von Radar-Rohdaten, d.h. zweiten Daten 211, in einen Datenstrom mit Kamera-Rohdaten 311, d.h. erste Daten 311. Die horizontale Achse gibt die Zeit t an. Die Datenrate der Radar-Rohdaten 211 kann beispielsweise bei 60 MB/s liegen, während die Datenrate der Kamera-Rohdaten 311 bei 252 MB/s liegt. Es ist deutlich sichtbar, dass zwischen jeweils zwei Sequenzen von ersten Daten 311 eine Datenlücke 312 mit einer ersten vordefinierten Größe angeordnet ist. Beispielsweise entspricht das erste Datenpaket 311.0 der ersten Daten 311 einer Zeile N eines Kamerabilds und das zweite Datenpaket 311,1 der Zeile N+1 desselben Kamerabilds. Die Datenlücke 312 dazwischen entspricht beispielsweise einer Kamerazeilen "blanking phase".

Ein erstes Datenpaket A von Radar-Rohdaten 211 wird beispielsweise in drei Teilpakete A1, A2, A3 unterteilt.

Die Daten-Teilpakete A1, A2, A3 werden über die Leitung 210 und den Receiver 420 zum Pufferspeicher 457 übertragen und dieser damit gefüllt (siehe **Fig. 2****).** Zu einem Zeitpunkt t1 ist der Pufferspeicher 457 mit Daten mit einer zweiten vordefinierten Größe, welche kleiner oder gleich der ersten vordefinierten Größe ist, gefüllt. Zu Beginn der Datenlücke 312, d.h. zum Zeitpunkt t2, werden die gepufferten Daten 212 in die Datenlücke 312 eingefügt. Damit wird ein gemeinsamer Datenstrom, d.h. dritte Daten 111, erzeugt. Dies wird bei **Fig. 3** anhand von drei Radardatenpaketen A (A1, A2, A3), B (B1, B2, B3) und C (C1, C2, C3) (211) dargestellt. Diese werden jeweils auf Pufferfüllungen A1, A2, A3, usw. (212) aufgeteilt, um in die jeweiligen Datenlücken 312 des Kamera-Rohdatenstroms 311 eingefüllt zu werden. Dies ergibt den kombinierten dritten Datenstrom 111, bei dem z.B. die Datenpakete 111.1a und 111.2a den beiden Kamerarohdatenpaketen 311.1 und 311.2 (Kamerabildzeile N+1 und Kamerabildzeile N+2) entstammen und das dazwischen eingefügte Datenpaket 111.1b dem gepufferten Radar-Datenpaket A1 der Pufferdaten 212. Die Datenrate des kombinierten dritten Datenstroms 111 liegt beispielsweise ebenfalls bei 252 MB/s, ist also bevorzugt identisch mit der Datenrate des Kamera-Rohdatenstroms 311.

Zum Zeitpunkt t3 sind alle Daten des Radardatenpakets A (A1, A2, A3) übertragen, der Pufferspeicher 457 ist leer. Zum Zeitpunkt t4 steht das erste Teilpaket B1 des folgenden Radardatenpakets B noch nicht vollständig im Pufferspeicher. Die zu diesem Zeitpunkt auftretende Datenlücke im Kamera-Rohdatenstrom 211 wird nicht mit Radardaten befüllt. Dagegen stehen ab dem Zeitpunkt t5 ausreichend Daten für das Teilpaket B1 im Pufferspeicher. Mit dem Ende des aktuellen Kamera-Rohdatenpakets 311.5 (Kamerabildzeile N+5) beginnt zum Zeitpunkt t6 die Übertragung des Radarteilpakets B1 aus dem Pufferspeicher in den kombinierten Datenstrom 111 als neues Datenpaket 111.5b.

Zum Zeitpunkt t7 befinden sich ausreichend Daten für das erste Teilpaket C1 des Radardatenpakets C im Pufferspeicher 457. Zu diesem Zeitpunkt ist jedoch das Zeilenblanking der Kamera (Datenlücke zwischen den Kamera-Rohdatenpaketen der Zeilen N+9, 311.9 und N+10, 311.10) zeitlich bereits zu weit fortgeschritten. Daher könnte das Teilpaket C1 nicht mehr bis zum Beginn der folgenden Kamerabildzeile N+10 (Kamera-Rohdatenpaketen 311.10) übertragen werden. Die Übertragung wird daher verzögert bis zur kommenden Datenlücke im Kamera-Rohdatenstrom 311. Mit dem Ende des Kamera-Rohdatenpakets der Kamerabildzeile N+10, 311.10, also zum Zeitpunkt t8 beginnt die Übertragung des Radarpakets C1 aus dem Pufferspeicher zum kombinierten Datenstrom 111 als neues Datenpaket 111.10b.

Eine mögliche Umsetzung sieht als Pufferspeicher 457 einen FIFO vor. Der Eingang 452 des FIFO 457 wird durch den zweiten Datenstrom 211 gespeist. Der Ausgang des FIFO stellt die gepufferten Datenpakete 212 des Radar-Rohdatenstroms 211 für den Multiplexer 455 bereit.

Der Kamera-Rohdatenstrom 311 liegt an einem ersten Eingang 453 des Multiplexer 455 an. Der durch die

Multiplexvorrichtung 450 kombinierte Datenstrom 111 wird vom Ausgang 451 des Multiplexers 455 an den Transmitter 440 bzw. an den Serializer als Sendevorrichtung 180 der gemeinsamen Daten geleitet. Der Serializer 180 wandelt den kombinierten Datenstrom 111 in serielle Signale (z.B. LVDS) um. Die seriellen Datensignale können an das Steuergerät 515 zur Auswertung der Sensor-Rohdaten übertragen werden.

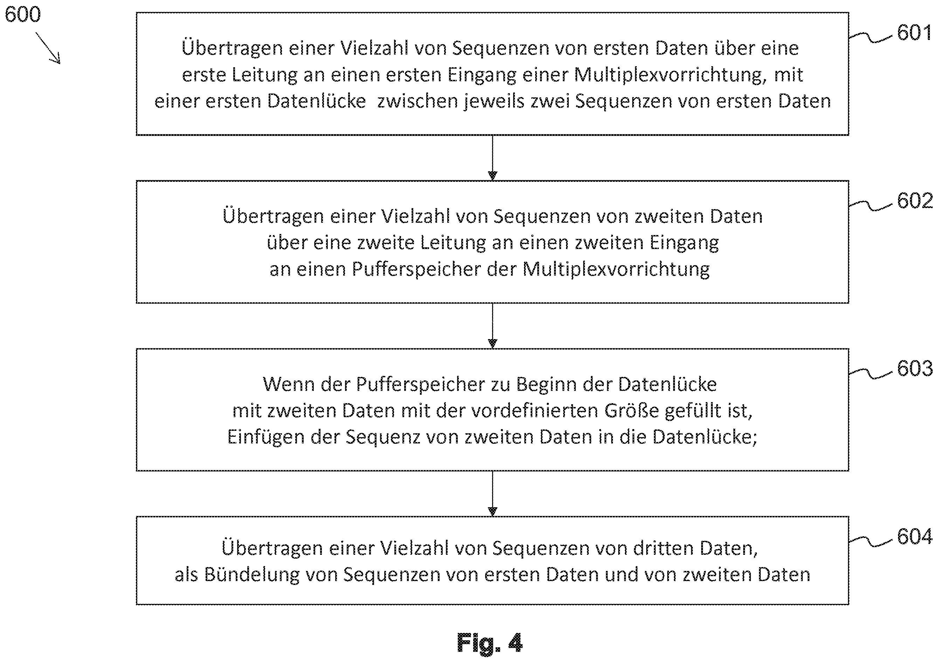

**Fig. 4** zeigt eine Übersicht über ein Verfahren 600 zur Bündelung von zwei Datenkanälen über eine Punkt-zu-Punkt-Verbindung.

In einem Schritt 601 wird eine Vielzahl von Sequenzen von ersten Daten 311 über eine erste Leitung 310 an einen ersten Eingang 453 einer Multiplexvorrichtung 450 übertragen. Dabei ist der erste Eingang 453 mit einem Multiplexer 455 verbunden, welcher Teil der Multiplexvorrichtung 450 ist. Dabei ist zwischen jeweils zwei Sequenzen von ersten Daten 311 eine erste Datenlücke 312 mit einer vordefinierten Größe angeordnet.

In einem Schritt 602 wird eine Vielzahl von Sequenzen von zweiten Daten 211 über eine zweite Leitung 210 an einen zweiten Eingang 452 der Multiplexvorrichtung 450 übertragen, wobei der zweite Eingang 452 mit dem Multiplexer 455 über den Pufferspeicher 457, welcher die zweiten Daten 211 von der zweiten Leitung 210 zwischenspeichert, verbunden ist.

In einem Schritt 603 wird, zu Beginn der Datenlücke 312, überprüft, ob der Pufferspeicher 457 mit zweiten Daten 211 mit der vordefinierten zweiten Größe gefüllt ist, wobei die zweite vordefinierte Größe kleiner oder gleich der ersten vordefinierten Größe ist. Wenn der Pufferspeicher 457 zu Beginn der Datenlücke 312 mit zweiten Daten mit der vordefinierten Größe gefüllt ist, wird eine Sequenz der gepufferten zweiten Daten 212 in die Datenlücke eingefügt und so eine Sequenz von dritten Daten 111 gebildet.

In einem Schritt 604 wird die Sequenz von dritten Daten 111, welche eine Bündelung von Sequenzen von ersten Daten 311 und von Sequenzen von zweiten Daten 211 aufweist, auf die gemeinsame Datenleitung 110 übertragen, so dass die Sequenzen von dritten Daten 111 eine Bündelung von Sequenzen von ersten Daten 311 und von Sequenzen von zweiten Daten 211 aufweisen.

Ergänzend sei darauf hingewiesen, dass "umfassend" und "aufweisend" keine anderen Elemente oder Schritte ausschließt und die unbestimmten Artikel "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

### Liste der Bezugszeichen

- 10: Vorrichtung
- 20: Vorrichtung
- 100: Sensorvorrichtung
- 110: Datenleitung des gemeinsamen Transceivers
- 111: dritte Daten
- 180: Sendevorrichtung der gemeinsamen Daten
- 185, 285, 385: Leitungen
- 190: Empfänger der gemeinsamen Daten
- 200: Radar-Transceiver
- 205: CSI-2 Transmitter, Radardaten
- 210: Datenleitung des Radar-Transceivers
- 211: zweite Daten
- 212: gepufferte zweite Daten
- 280: Sendevorrichtung des Radar-Transceivers
- 290: Empfangsvorrichtung des Radar-Transceivers
- 300: Bildsensor
- 305: CSI-2 Transmitter, Bilddaten
- 310: Datenleitung des Bildsensors
- 311: erste Daten
- 312: Datenlücke
- 380: Sender des Bilddaten-Transceivers
- 390: Empfänger des Bilddaten-Transceivers
- 400: Steuergerät für gemeinsame Daten
- 420: Receiver des Radar-Transceivers
- 430: Receiver des Bildsensors
- 440: Transmitter
- 450: Multiplexvorrichtung
- 451: Ausgang der Multiplexvorrichtung
- 452: zweiter Eingang der Multiplexvorrichtung
- 453: erster Eingang der Multiplexvorrichtung
- 455: Multiplexer
- 457: Pufferspeicher
- 500: Steuergerätevorrichtung
- 510: Datenleitung des gemeinsamen Transceivers
- 517: Receiver-Baustein
- 520: Datenleitung des Radar-Transceivers
- 515, 525, 535: Steuergeräte
- 527: Empfänger für Radardaten
- 530: Datenleitung des Bildsensors
- 537: Empfänger für Bilddaten
- 550: zentrales Steuergerät
- 600: Verfahren
- 601 .. 604: Verfahrensschritte
- A1, A2, A3: Pufferfüllungen
- A, B, C: Radardatenpakete

## Patentansprüche

1. Vorrichtung (20) zur Bündelung von zwei Datenkanälen über eine Punkt-zu-Punkt-Verbindung, aufweisend:
- einen ersten Datenkanal, der eine Vielzahl von Sequenzen von ersten Daten (311) über eine erste Leitung (310) überträgt, wobei zwischen jeweils zwei Sequenzen von ersten Daten (311) eine Datenlücke (312) mit einer ersten vordefinierten Größe angeordnet ist,
- einen zweiten Datenkanal, der eine Vielzahl von Sequenzen von zweiten Daten (211) über eine zweite Leitung (210) überträgt,
wobei der erste Datenkanal Kamera-Rohdaten und der zweite Datenkanal Rohdaten von einem Radar-, Lidar-, Ultraschall- und/oder Laser-System überträgt, und wobei der zweite Datenkanal eine andere Datenrate als der erste Datenkanal aufweist,
- einen dritten Datenkanal, der eine Sequenz von dritten Daten (111) über eine dritte Leitung (110) überträgt, und
- eine Multiplexvorrichtung (450) mit einem Multiplexer (455) und einem Pufferspeicher (457),
wobei ein erster Eingang (453) der Multiplexvorrichtung (450) mit der ersten Leitung (310) verbunden ist und der erste Eingang (453) mit dem Multiplexer (455) verbunden ist,
ein zweiter Eingang (452) der Multiplexvorrichtung (450) mit der zweiten Leitung (310) verbunden ist und der zweite Eingang (452) mit dem Multiplexer (455) über den Pufferspeicher (457), welcher eingerichtet ist, die zweiten Daten (211) von der zweiten Leitung (210) zwischenzuspeichern, verbunden ist, und
ein Ausgang (451) der Multiplexvorrichtung (450) mit der dritten Leitung (110) verbunden ist und der Ausgang (451) mit einem Ausgang des Multiplexers (455) verbunden ist, und
wobei der Multiplexer (455) eingerichtet ist,
die Sequenz von ersten Daten (311) von dem ersten Eingang (453) an den Ausgang (451) zu übertragen, logische Entscheidungen zu treffen, ob und wann zweite Daten in die Datenlücke der ersten Daten eingefügt werden und
die Sequenz von zweiten Daten (211) von dem zweiten Eingang (452) an den Ausgang (451) zu übertragen, wenn an dem ersten Eingang (453) die Datenlücke (312) beginnt und wenn der Pufferspeicher (457) mit zweiten Daten (211) mit einer zweiten vordefinierten Größe gefüllt ist, wobei die zweite vordefinierte Größe kleiner oder gleich der ersten vordefinierten Größe ist,
so dass die Sequenzen von dritten Daten (111) eine Bündelung von Sequenzen von ersten Daten (311) und von Sequenzen von zweiten Daten (211) aufweisen.

2. Vorrichtung (20) nach Anspruch 1,
wobei die Punkt-zu-Punkt-Verbindung auf der Basis eines CSI-2 Protokolls funktioniert und wobei der erste Datenkanal und der zweite Datenkanal unterschiedliche CSI-2-Kanalnummern aufweisen.

3. Vorrichtung (20) nach Anspruch 1 oder 2,
wobei die Länge eines Pakets von zweiten Daten (211) in einem Header-Element des Pakets der zweiten Daten (211) vermerkt ist, so dass der Multiplexer (455) dazu eingerichtet ist, anhand der Länge zu entscheiden, ob und welche Dimensionierung oder Partitionierung der zweiten Daten (211) im Pufferspeicher (457) vorgenommen wird, oder ob der Pufferspeicher (457) sofort geleert werden kann.

4. Vorrichtung (20) nach einem der vorhergehenden Ansprüche,
wobei der Pufferspeicher (457) als FIFO gestaltet ist.

5. Vorrichtung (20) nach einem der vorhergehenden Ansprüche,
wobei die Datenrate des ersten Datenkanals mehr als zweimal so hoch ist, insbesondere mehr als viermal so hoch ist, als die Datenrate des zweiten Datenkanals.

6. Vorrichtung (20) nach einem der vorhergehenden Ansprüche,
wobei die Multiplexvorrichtung (450) und der Pufferspeicher (457) als FPGA, als CPLD oder als ein ASIC, insbesondere als ein einziges FPGA oder als ein einziges ASIC, realisiert sind.

7. Vorrichtung (20) nach Anspruch 6,
wobei das FPGA, das CPLD oder das ASIC derart konfiguriert ist, dass die Entscheidung, ob und wann die Sequenz von zweiten Daten (211) von dem zweiten Eingang (452) der an den Ausgang (451) der Multiplexvorrichtung (450) übertragen wird, durch einen auf dem FPGA, CPLD oder ASIC implementierten endlichen Zustandsautomaten getroffen wird.

8. Verfahren zur Bündelung von zwei Datenkanälen auf der Basis eines CSI-2 Protokolls, mittels einer Vorrichtung (20), die dazu konfiguriert ist, die folgenden Schritte auszuführen:
- Übertragen einer Vielzahl von Sequenzen von Kamera-Rohdaten als ersten Daten (311) über eine erste Leitung (310) an einen ersten Eingang (453) einer Multiplexvorrichtung (450), wobei der erste Eingang (453) mit einem Multiplexer (455) verbunden ist, und wobei zwischen jeweils zwei Sequenzen von ersten Daten (311) eine Datenlücke (312) mit einer ersten vordefinierten Größe angeordnet ist;
- Übertragen einer Vielzahl von Sequenzen von Rohdaten eines Radar-, Lidar-, Ultraschall- und/oder LaserSystems als zweiten Daten (211), wobei die zweiten Daten (211) eine andere Datenrate aufweisen als die ersten Daten (311), über eine zweite Leitung (210) an einen zweiten Eingang (452) der Multiplexvorrichtung (450), wobei der zweite Eingang (452) mit dem Multiplexer (455) über den Pufferspeicher (457), welcher die zweiten Daten (211) von der zweiten Leitung (210) zwischenspeichert, verbunden ist;
- Treffen von logischen Entscheidungen, ob und wann zweite Daten in die Datenlücke der ersten Daten eingefügt werden
- Wenn der Pufferspeicher (457) zu Beginn der Datenlücke (312) mit zweiten Daten (211) mit einer zweiten vordefinierte Größe gefüllt ist, wobei die zweite vordefinierte Größe kleiner oder gleich der ersten vordefinierte Größe ist, Einfügen der Sequenz von zweiten Daten (211) in die Datenlücke (312);
- Übertragen einer Vielzahl von Sequenzen von dritten Daten (111), welche eine Bündelung von Sequenzen von ersten Daten (311) und von Sequenzen von zweiten Daten (211) aufweisen.

9. Verwendung einer Vorrichtung nach einem der Ansprüche 1 bis 7 oder eines Verfahrens nach Anspruch 8 zur Bündelung von Kamera- und Radar-Rohdatenkanälen.

10. Programmelement, welches, wenn damit ein FPGA oder CPLD programmiert oder ein ASIC generiert wird, das FPGA, das CPLD oder das ASIC anweist, das Verfahren nach Anspruch 8 durchzuführen.

11. Computerlesbares Medium, auf dem ein Programmelement nach Anspruch 10 gespeichert ist.

## Claims

1. A device (20) for bundling two data channels via a point-to-point connection, comprising:
- a first data channel that transmits a plurality of sequences of first data (311) over a first line (310), wherein a data gap (312) of a first predefined size is arranged between each two sequences of first data (311),
- a second data channel that transmits a plurality of sequences of second data (211) over a second line (210),
wherein the first data channel transmits camera raw data and the second data channel transmits raw data from a radar, lidar, ultrasound and/or laser system, and wherein the second data channel has a different data rate than the first data channel,
- a third data channel that transmits a sequence of third data (111) over a third line (110), and
- a multiplexing device (450) with a multiplexer (455) and a buffer storage device (457),
wherein a first input (453) of the multiplexing device (450) is connected to the first line (310) and the first input (453) is connected to the multiplexer (455),
a second input (452) of the multiplexing device (450) is connected to the second line (310) and the second input (452) is connected to the multiplexer (455) via the buffer memory (457) which is configured to temporarily store the second data (211) from the second line (210),
and
an output (451) of the multiplexing device (450) is connected to the third line (110), and the output (451) is connected to an output of the multiplexer (455), and wherein the multiplexer (455) is configured to,
transmit the sequence of first data (311) from the first input (453) to the output (451), to make logical decisions about whether and when to insert second data into the data gap of the first data and
transmit the sequence of second data (211) from the second input (452) to the output (451) when the data gap (312) begins at the first input (453) and when the buffer memory (457) is filled with second data (211) of a second predefined size, wherein the second predefined size is less than or equal to the first predefined size, so that the sequences of third data (111) comprise a bundling of sequences of first data (311) and of sequences of second data (211).

2. The device (20) according to claim 1,
wherein the point-to-point connection operates on the basis of a CSI-2 protocol and wherein the first data channel and the second data channel have different CSI-2 channel numbers.

3. The device (20) according to claim 1 or 2,
wherein the length of a packet of second data (211) is noted in a header element of the packet of second data (211), so that the multiplexer (455) is configured to decide, based on the length, whether and what dimensioning or partitioning of the second data (211) is carried out in the buffer memory (457), or whether the buffer memory (457) can be emptied immediately.

4. The device (20) according to any one of the preceding claims,
wherein the buffer storage (457) is designed as a FIFO.

5. The device (20) according to any one of the preceding claims,
wherein the data rate of the first data channel is more than twice as high, in particular more than four times as high, as the data rate of the second data channel.

6. The device (20) according to any one of the preceding claims,
wherein the multiplexing device (450) and the buffer memory (457) are implemented as an FPGA, as a CPLD or as an ASIC, in particular as a single FPGA or as a single ASIC.

7. The device (20) according to claim 6,
wherein the FPGA, CPLD or ASIC is configured such that the decision as to whether and when the sequence of second data (211) is transferred from the second input (452) to the output (451) of the multiplexing device (450) is made by a finite state machine implemented on the FPGA, CPLD or ASIC.

8. A method for bundling two data channels based on a CSI-2 protocol, using a device (20) configured to perform the following steps:
- transmitting a plurality of sequences of camera raw data as first data (311) via a first line (310) to a first input (453) of a multiplexing device (450), wherein the first input (453) is connected to a multiplexer (455), and wherein a data gap (312) having a first predefined size is arranged between each two sequences of first data (311);
- transmitting a plurality of sequences of raw data from a radar, lidar, ultrasound and/or laser system as second data (211), wherein the second data (211) have a different data rate than the first data (311), via a second line (210) to a second input (452) of the multiplexing device (450), wherein the second input (452) is connected to the multiplexer (455) via the buffer memory (457) which temporarily stores the second data (211) from the second line (210);
- making logical decisions about whether and when to insert second data into the data gap of the first data
- if the buffer memory (457) is filled with second data (211) having a second predefined size at the beginning of the data gap (312), wherein the second predefined size is smaller than or equal to the first predefined size,
inserting the sequence of second
data (211) into the data gap (312);
- transmitting a plurality of sequences of third data (111) comprising a bundle of sequences of first data (311) and sequences of second data (211).

9. A use of a device according to any one of claims 1 to 7 or of a method according to claim 8 for bundling camera and radar raw data channels.

10. A program element which, when used to program an FPGA or CPLD or to generate an ASIC, instructs the FPGA, CPLD or ASIC to perform the method according to claim 8.

11. A computer-readable medium on which a program element according to claim 10 is stored.

## Revendications

1. Dispositif (20) de groupage de deux canaux de données par une connexion point à point, comprenant :
- un premier canal de données qui transmet une pluralité de séquences de premières données (311) sur une première ligne (310), dans lequel un intervalle de données (312) d'une première taille prédéfinie est disposé entre chaque paire de séquences de premières données (311),
- un deuxième canal de données qui transmet une pluralité de séquences de deuxièmes données (211) sur une deuxième ligne (210),
dans lequel le premier canal de données transmet des données brutes de caméra et le deuxième canal de données transmet des données brutes provenant d'un système radar, lidar, à ultrasons et/ou laser, et dans lequel le deuxième canal de données présente un débit de données différent de celui du premier canal de données,
- un troisième canal de données qui transmet une séquence de troisièmes données (111) sur une troisième ligne (110), et
- un dispositif de multiplexage (450) avec un multiplexeur (455) et une mémoire tampon (457),
dans lequel une première entrée (453) du dispositif de multiplexage (450) est connectée à la première ligne (310) et la première entrée (453) est connectée au multiplexeur (455),
une seconde entrée (452) du dispositif de multiplexage (450) est connectée à la deuxième ligne (310) et la seconde entrée (452) est connectée au multiplexeur (455) par l'intermédiaire de la mémoire tampon (457), qui est configurée pour stocker temporairement les deuxièmes données (211) de la deuxième ligne (210), et
une sortie (451) du dispositif de multiplexage (450) est connectée à la troisième ligne (110) et la sortie (451) est connectée à une sortie du multiplexeur (455), et dans lequel le multiplexeur (455) est configuré pour,
transférer la séquence de premières données (311) de la première entrée (453) à la sortie (451), prendre des décisions logiques quant à savoir si et quand des deuxièmes données sont insérées dans l'intervalle de données des premières données et
transférer la séquence de deuxièmes données (211) de la seconde entrée (452) à la sortie (451) lorsque l'intervalle de données (312) commence à la première entrée (453) et lorsque la mémoire tampon (457) est remplie de deuxièmes données (211) d'une seconde taille prédéfinie, dans lequel la seconde taille prédéfinie est inférieure ou égale à la première taille prédéfinie,
de sorte que les séquences de troisièmes données (111) présentent un groupage de séquences de premières données (311) et de séquences de deuxièmes données (211).

2. Dispositif (20) selon la revendication 1,
dans lequel la connexion point à point fonctionne sur la base d'un protocole CSI-2 et dans lequel le premier canal de données et le deuxième canal de données présentent des numéros de canal CSI-2 différents.

3. Dispositif (20) selon la revendication 1 ou 2,
dans lequel la longueur d'un paquet de deuxièmes données (211) est indiquée dans un élément d'en-tête du paquet de deuxièmes données (211), de sorte que le multiplexeur (455) est configuré pour décider, en fonction de la longueur, si et quel dimensionnement ou quelle partition des deuxièmes données (211) est effectué dans la mémoire tampon (457), ou si la mémoire tampon (457) peut être vidée immédiatement.

4. Dispositif (20) selon l'une des revendications précédentes,
dans lequel la mémoire tampon (457) est conçue comme un FIFO.

5. Dispositif (20) selon l'une des revendications précédentes,
dans lequel le débit de données du premier canal de données est plus de deux fois supérieur, en particulier plus de quatre fois supérieur, au débit de données du deuxième canal de données.

6. Dispositif (20) selon l'une des revendications précédentes,
dans lequel le dispositif de multiplexage (450) et la mémoire tampon (457) sont mis en œuvre sous forme de FPGA, de CPLD ou d'ASIC, en particulier sous forme de FPGA unique ou d'ASIC unique.

7. Dispositif (20) selon la revendication 6,
dans lequel le FPGA, le CPLD ou l'ASIC est configuré de sorte que la décision quant à savoir si et quand la séquence de deuxièmes données (211) est transférée de la seconde entrée (452) à la sortie (451) du dispositif de multiplexage (450) est prise par une machine à états finis mise en œuvre sur le FPGA, le CPLD ou l'ASIC.

8. Procédé de groupage de deux canaux de données sur la base d'un protocole CSI-2, au moyen d'un dispositif (20) configuré pour effectuer les étapes suivantes :
- la transmission d'une pluralité de séquences de données brutes de caméra en tant que premières données (311) par l'intermédiaire d'une première ligne (310) vers une première entrée (453) d'un dispositif de multiplexage (450), dans lequel la première entrée (453) est connectée à un multiplexeur (455), et dans lequel un intervalle de données (312) d'une première taille prédéfinie est disposé entre chaque paire de séquences de premières données (311) ;
- la transmission d'une pluralité de séquences de données brutes provenant d'un système radar, lidar, à ultrasons et/ou laser en tant que deuxièmes données (211), dans lequel les deuxièmes données (211) présentent un débit de données différent des premières données (311), par l'intermédiaire d'une deuxième ligne (210) vers une seconde entrée (452) du dispositif de multiplexage (450), dans lequel la seconde entrée (452) est connectée au multiplexeur (455) par l'intermédiaire de la mémoire tampon (457), qui stocke temporairement les deuxièmes données (211) de la deuxième ligne (210) ;
- la prise de décisions logiques quant à savoir si et quand les deuxièmes données sont insérées dans l'intervalle de données des premières données
- si la mémoire tampon (457) est remplie de deuxièmes données (211) d'une seconde taille prédéfinie au début de l'intervalle de données (312), dans lequel la seconde taille prédéfinie est inférieure ou égale à la première taille prédéfinie, l'insertion de la séquence de deuxièmes
données (211) dans l'intervalle de données (312) ;
- la transmission d'une pluralité de séquences de troisièmes données (111) qui présentent un groupage de séquences de premières données (311) et de séquences de deuxièmes données (211).

9. Utilisation d'un dispositif selon l'une quelconque des revendications 1 à 7 ou d'un procédé selon la revendication 8 pour le groupage de canaux de données brutes de la caméra et du radar.

10. Élément de programme qui, lorsqu'il est utilisé pour programmer un FPGA ou un CPLD ou pour générer un ASIC, ordonne au FPGA, au CPLD ou à l'ASIC d'exécuter le procédé selon la revendication 8.

11. Support lisible par ordinateur sur lequel est stocké un élément de programme selon la revendication 10.
